# EUROPEAN PATENT APPLICATION

(11) **EP 4 435 251 A1**
(43) Date of publication of application: **25.09.2024**
(21) Application number: 23164035.0
(22) Date of filing: 24.03.2023
(51) Int. Cl.: F03D 1/06

(54) **LOW NOISE WIND TURBINE BLADE**

(71) Applicant: LM Wind Power A/S, 6000 Kolding (DK)
(72) Inventor: WANG, Guannan, Schenectady, 12345 (US); HURAULT, Jeremy Pierre, 50110 Cherbourg en Contentin (FR); HERRIG, Andreas, 48499 Salzbergen (DE)
(74) Representative: COPA Copenhagen Patents

(57) **Abstract**

A wind turbine blade and a wind turbine having such wind turbine blade is disclosed. The wind turbine blade having a profiled contour including a pressure side and a suction side, and a leading edge and a trailing edge with a chord extending therebetween defining a chordwise direction. The wind turbine blade extends in a longitudinal direction between a root end and a tip end and having a blade length along the longitudinal direction. The wind turbine blade has a first airfoil blade section along the longitudinal direction being located between 40% and 100% of the blade length measured from the root end. Within the first airfoil blade section, the pressure side is substantially straight near the trailing edge.

## Description

The present disclosure relates generally to a wind turbine blades with a trailing edge. More particularly to an airfoil of the wind turbine blade, which is optimized to reduced noise emission.

### BACKGROUND

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 meters in length.

It is well-known that large wind turbine blades for modern wind turbines suffer from trailing edge noise generated by the airflow passing over the aerodynamic profile of the wind turbine blade. The airflow transforms from a substantially laminar airflow into a turbulent airflow over the blade surface and scatter at the trailing edge creating so called trailing edge noise. Flow can further separate from the boundary layers at a separation point and emit flow separation noise. This noise generated by the wind turbine may be annoying and disturbing for the nearby environment.

Some suggestions involving installation of trailing edge serrations and bristles have previously been proposed in an attempt to reduce noise generation near the trailing edge of the wind turbine blade.

### SUMMARY

It is an object of the present disclosure to provide solutions for a wind turbine blade eliminating, reducing or at least providing alternative solutions to the above problems. Particularly it is an object of the present disclosure to provide solutions for reducing noise generation of wind turbines. It is a further objective of the present disclosure to provide solutions, which balances several conflicting requirements of the wind turbine, such as optimized power generation and reduced noise generation.

Thus, the present disclosure relates to an airfoil, such as an airfoil for a wind turbine blade. Accordingly, the present disclosure also relates to a wind turbine blade employing such airfoil and a wind turbine comprising the disclosed wind turbine blade, preferably comprising two or more, e.g. three, of such wind turbine blades.

The present inventors have found that the airfoil and wind turbine blade as disclosed herein provides an advantageous reduction of noise compared to prior art airfoils and wind turbine blades, while at least maintaining, but even possibly enhancing, advantageous aerodynamic efficiency.

### GENERAL DESCRIPTION

The disclosed wind turbine blade has a profiled contour including a pressure side and a suction side. The wind turbine blade further includes a leading edge and a trailing edge with a chord extending therebetween defining a chordwise direction and a chord length between the leading edge and the trailing edge. The wind turbine blade extends in a longitudinal direction between a root end and a tip end. The wind turbine blade has a blade length along the longitudinal direction from the root end to the tip end. The blade length may be more than 40 metres, such as more than 60 metres, such as more than 70 metres. In some examples, the blade length may be more than 100 metres.

The wind turbine blade has a first airfoil blade section having a first blade section length along the longitudinal direction and being located between 40% and 100% of the blade length measured from the root end. In some embodiments, the first airfoil blade section may be located between 40% and 95% or between 40% and 90% of the blade length measured from the root end.

The first airfoil blade section may employ the disclosed airfoil, i.e the disclosed airfoil may have the shape as being described in the following with respect to the first airfoil blade section of the disclosed wind turbine blade.

Within the first airfoil blade section, the pressure side and the suction side, in a cross sectional plane perpendicular to the longitudinal direction, meets at the trailing edge forming a first trailing edge angle between the pressure side and the suction side at the trailing edge. The first trailing edge angle may be at least 15 degrees, such as between 15-30 degrees, preferably between 17-25 degrees.

Within the first airfoil blade section, the pressure side may be substantially straight near the trailing edge, e.g. for all positions between 85% and 100% of the chord measured from the leading edge, and/or for all positions between 85% and 98% of the chord measured from the leading edge, and/or for all positions between 90% and 98% of the chord measured from the leading edge.

Within the first airfoil blade section, the pressure side in the cross sectional plane may be convex between the leading edge and a first chord position. The first chord position may be at a first chord distance from the leading edge, e.g. between 40-60% of the chord, e.g. between 45-55% of the chord, such as approximately 50% of the chord, measured from the leading edge.

Within the first airfoil blade section, the pressure side in the cross sectional plane may be concave between the first chord position and a second chord position. The second chord position may be at a second chord distance measured from the leading edge, e.g. between 80-100% of the chord, such as 90%, 95%, 98% or 100% of the chord, measured from the leading edge. The second chord distance may be larger than the first chord distance. In some examples, the second chord position may be at the trailing edge.

A maximum curvature of the pressure side in the range between the first chord position and the trailing edge may be located between the first chord position and a third chord position. In other words, the maximum curvature of the concave part of the pressure side may be located more forward, i.e. more towards the leading edge, than the third chord position. The third chord position may be between the first chord position and the second chord position. The third chord position may be less than 80% of the chord measured from the leading edge. For example, the third chord position may be 75% of the chord measured from the leading edge or 70% of the chord measured from the leading edge.

Within the first airfoil blade section, the pressure side in the cross sectional plane may be substantially linear between the second chord position and the trailing edge. For example, the pressure side in the cross sectional plane may have a curvature of less than 0.2, such as less than 0.1, such as less than 0.05, between the second chord position and the trailing edge.

The chord may be located between the pressure side and the suction side, i.e. the pressure side and the suction side may be on different sides of the chord, e.g. for the entirety (or near all) of the cross sectional plane of the airfoil within the first airfoil blade section. For example, within the first airfoil blade section, at least 95% of the chord may be located between the pressure side and the suction side. For other airfoils it is common, e.g. near the trailing edge, that the chord extends outside the airfoil, i.e. such that the suction side and the pressure side are on the same side of the chord. For the airfoil of the present disclosure, i.e. within the first airfoil blade section of the wind turbine blade, e.g. at least for all positions between 70% and 95% of the chord measured from the leading edge, the chord may be located between the pressure side and the suction side.

The pressure side may be close to the chord near the trailing edge. For example, within the first airfoil blade section, a pressure side to chord distance between the pressure side and the chord measured perpendicular to the chord may be less than 0.5% of the chord length for all positions between 80% and 100% of the chord measured from the leading edge.

In some examples, the pressure side may be substantially parallel to the chord near the trailing edge. For example, within the first airfoil blade section, the pressure side may be substantially parallel to the chord near the trailing edge and/or for all positions between 85% and 100% of the chord measured from the leading edge, and/or for all positions between 85% and 98% of the chord measured from the leading edge, and/or for all positions between 90% and 98% of the chord measured from the leading edge. A deviation between the pressure side and the chord of less than a couple of degrees such as less than 1 degree, such as less than 0.5 degree may be considered substantially parallel.

The blade thickness may be defined as the distance between the pressure side and the suction side measured perpendicular to the chord. This may alternatively be denoted airfoil thickness. Within the first airfoil blade section, the maximum blade thickness, i.e. the chord wise position where the blade thickness is the greatest, may be at a position between 20-30% of the chord measured from the leading edge. More preferably, the maximum blade thickness may be at a position between 25-30% of the chord measured from the leading edge, such as between 25-29% of the chord measured from the leading edge.

Within the first airfoil blade section, the maximum blade thickness, i.e. the greatest value of the blade thickness, may be between 18-27% of the chord length, such as between 19-24% of the chord length, such as between 19-23% of the chord length, such as between 20-21% of the chord length.

The wind turbine blade may comprise a plurality of airfoil blade sections along the longitudinal direction of the wind turbine blade i.e. between the tip end and the root end of the wind turbine blade. The plurality of airfoil blade sections includes the first airfoil blade section and a second airfoil blade section and optionally a third airfoil blade section. The second airfoil blade section and/or the third airfoil blade section may have a different geometry, i.e. a different airfoil, than the first airfoil blade section. The third airfoil blade section may have a different geometry, i.e. a different airfoil, than the second airfoil blade section and/or the first airfoil blade section. In some examples, the second airfoil blade section is a prior art airfoil. Additionally or alternatively, in some examples, the third airfoil blade section is a prior art airfoil.

The first airfoil blade section may adjoin the second airfoil blade section and/or the first airfoil blade section may adjoin the third airfoil blade section. The first airfoil blade section may be between the second airfoil blade section and the third airfoil blade section. In some examples, the second airfoil blade section may be located between the first airfoil blade section and the tip end (i.e. 100% of the blade length measured from the root end). In other examples, the second airfoil blade section may be located between the root end and the first airfoil blade section, or the second airfoil blade section may be located between 40% of the blade length measured from the root end and the first airfoil blade section. In other words, the first airfoil blade section may be located between the second airfoil blade section and the tip end (i.e. 100% of the blade length measured from the root end).

Each of the plurality of airfoil blade sections may have a respective blade section length along the longitudinal direction. For example, the second airfoil blade section may have a second blade section length along the longitudinal direction and/or the third airfoil blade section may have a third blade section length along the longitudinal direction.

The plurality of airfoil blade sections, e.g. the first airfoil blade section, the second airfoil blade section and/or the third airfoil blade section, may be located between 40% and 100% of the blade length measured from the root end. In some embodiments, the plurality of airfoil blade sections, e.g. the first airfoil blade section, the second airfoil blade section and/or the third airfoil blade section, may be located between 40% and 95% or between 40% and 90% of the blade length measured from the root end.

Some or each of the plurality of airfoil blade sections may be longer than 10% of the blade length. For example, the first blade section length, the second blade section length and/or the third blade section length may be at least 10% of the blade length. In some examples, the first blade section length may be at least 50% of the blade length.

The second airfoil blade section may be located between the first airfoil blade section and 100% of the blade length measured from the root end, i.e. the second airfoil blade section may be located between the first airfoil blade section and the tip end.

While the present disclosure is exemplifying the use of the presently disclosed airfoil for wind turbine blades, for which it is especially advantageous, it is emphasized that the presently disclosed airfoil may alternatively or additionally be used for other purposes, such as hydroelectric turbine blades, airplane wings, helicopter rotor blades, etc.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 illustrates an exemplary wind turbine,
Fig. 2 shows a schematic view of an exemplary wind turbine blade,
Fig. 3 is a schematic diagram illustrating a cross sectional view of an exemplary wind turbine blade,
Figs. 4a and 4b are schematic diagrams illustrating a cross sectional view of an exemplary airfoil,
Figs. 5a and 5b schematically shows an exemplary airfoil compared to prior art wind turbine airfoils,
Figs. 6a and 6b show noise levels for airfoils at various angle of attack, and
Figs. 7a and 7b show aerodynamic efficiency for airfoils at various lift coefficients.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

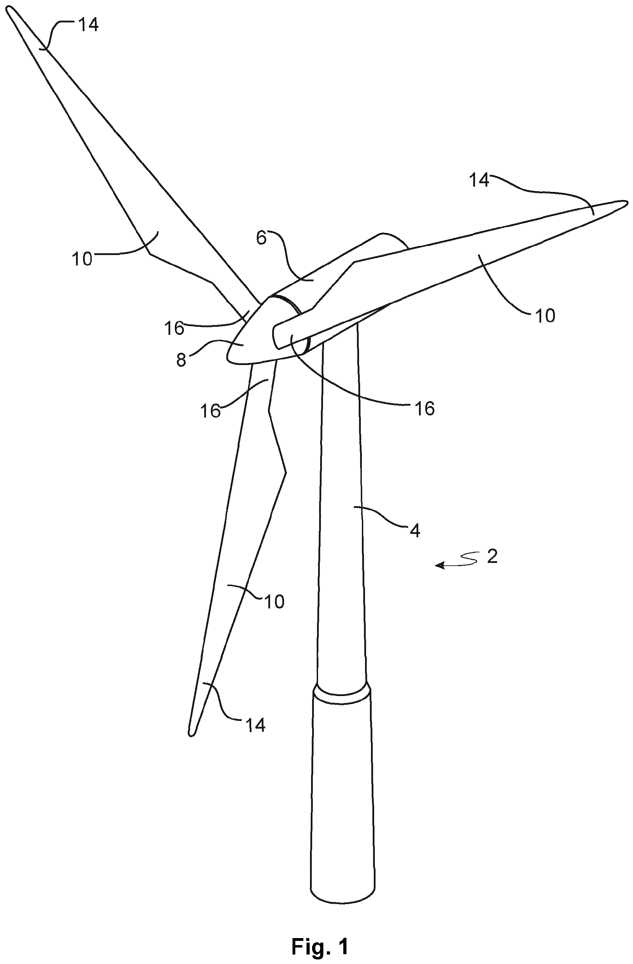

Fig. 1 illustrates an exemplary wind turbine 2, such as a conventional modern upwind wind turbine according to the so-called "Danish concept". The wind turbine 2 has a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

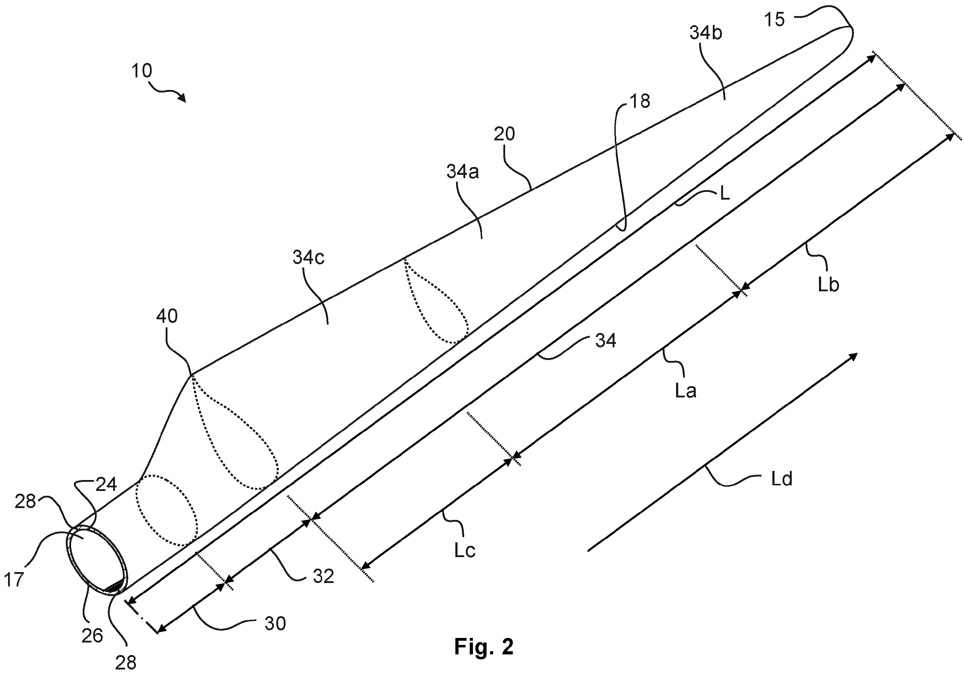

Fig. 2 shows a schematic view of an exemplary wind turbine blade 10, such as a wind turbine blade 10 of the wind turbine 2 as illustrated in Fig. 1. The wind turbine blade 10 extends in a longitudinal direction Ld between a root end 17 and a tip end 15, having a blade length L along the longitudinal direction Ld from the root end 17 to the tip end 15. The blade length L may be more than 60 metres, such as more than 70 metres. In some examples, the blade length L may be more than 100 metres.

The wind turbine blade 10 has the shape of a conventional wind turbine blade and comprises a root region 30 closest to the hub, a profiled or airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

The airfoil region 34, may include a plurality of airfoil blade sections, which may have different profiles. For example, the wind turbine blade 10 may have a first airfoil blade section 34a having a first blade section length La, a second airfoil blade section 34b having a second blade section length Lb, and a third airfoil blade section 34c having a third blade section length Lc. In some examples, the airfoil region 34 may include fewer or more airfoil blade sections. The first blade section length La may be at least 10% of the blade length L, such as at least 50% of the blade length L.

The plurality of airfoil blade sections 34a, 34b, 34c may be located between 40% and 100% of the blade length L measured from the root end. In some embodiments, the plurality of airfoil blade sections 34a, 34b, 34c may be located between 40% and 95% or between 40% and 90% of the blade length measured from the root end.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell typically comprising two blade shell parts or half shells, a first blade shell part 24 and a second blade shell part 26, typically made of fibre-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28, e.g. extending along the trailing edge 20 and the leading edge 18 of the blade 10. Typically, the root ends of the blade shell parts 24, 26 has a semicircular or semi-oval outer cross-sectional shape.

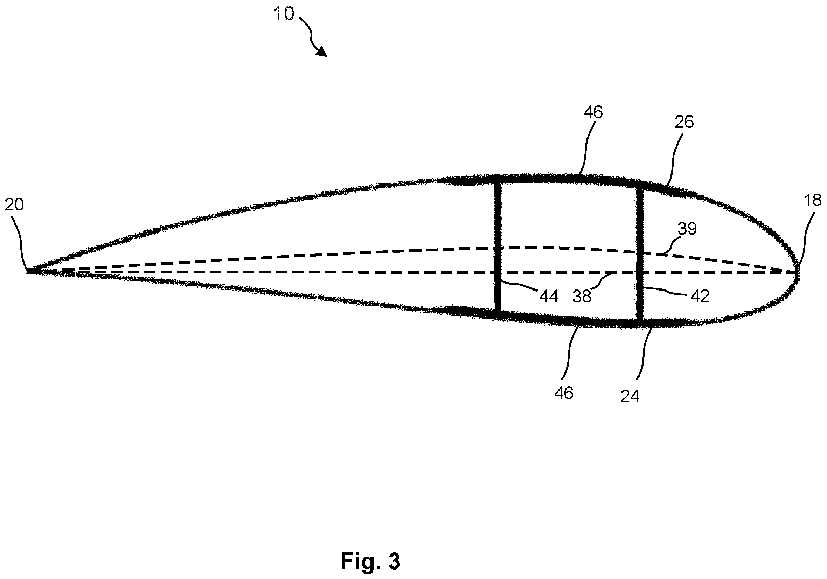

Fig. 3 is a schematic diagram illustrating a cross sectional view of an exemplary wind turbine blade 10, e.g. a cross sectional view of the airfoil region of the wind turbine blade 10, such as the wind turbine blade 10 as described in relation to Fig. 2. The wind turbine blade 10 comprises a leading edge 18, a trailing edge 20, a pressure side 24, and a suction side 26. The wind turbine blade 10 further comprises two spar caps (sometimes also referred to as main laminates) 46, one being arranged towards the pressure side 24 and the other being arranged towards the suction side 26. The wind turbine blade 10 comprises a chord 38 between the leading edge 18 and the trailing edge 20. The leading edge 18 is the point of the airfoil most distant from the trailing edge 20, i.e. maximizing the length of the chord 38. Also, a blade median may be defined (also sometimes referred to as the camber line) between the pressure side 24 and the suction side 26 is illustrated. The blade median 39 is the median between the pressure side 24 and the suction side 26, measured perpendicular to the chord 38. The blade median may be found by drawing inscribed circles from the leading edge 18 to the trailing edge 20. The blade median follows the centres of these inscribed circles.

The wind turbine blade 10 comprises shear webs, such as a leading edge shear web 42 and a trailing edge shear web 44. The shear webs 42, 44 extends between the pressure side 24 and the suction side 26 of the wind turbine blade 10, e.g. between the spar caps 46.

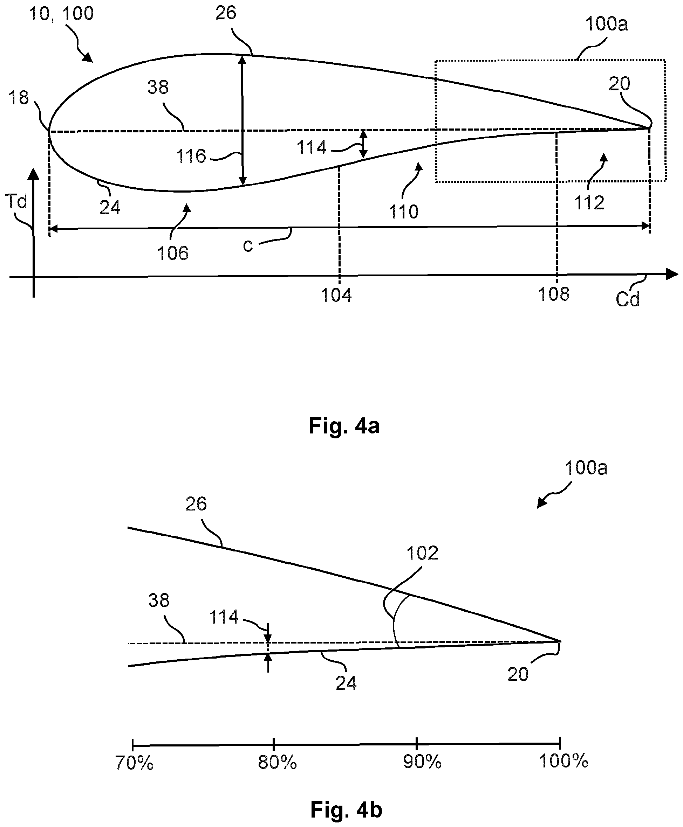

Figs. 4a and 4b are schematic diagrams illustrating a cross sectional view of an exemplary airfoil 100 of an exemplary wind turbine blade 10. Fig. 4b shows a closer view of the trailing edge part 100a of the airfoil 100. The airfoil 100 may be an airfoil of any or all of the airfoil blade sections 34, 34a, 34b, 34c illustrated and described in Fig. 2. For example, the airfoil 100 may be of an airfoil blade section, such as the first airfoil blade section 34a. The airfoil 100 may be of an airfoil blade section being located between 40% and 100% of the blade length L measured from the root end. In some examples, the airfoil blade section with the airfoil 100, such as the first airfoil blade section 34a may be located between 40% and 95% or between 40% and 90% of the blade length measured from the root end.

The airfoil blade section with the airfoil 100, such as the first airfoil blade section, may have a first blade section length along the longitudinal direction of the wind turbine blade, the first blade section length may be at least 10% of the blade length L, such as at least 50% of the blade length L. In other words, the airfoil 100 may be employed throughout a length of the blade of more than 10%, such as more than 50% of the blade length L.

The airfoil 100, like the one illustrated in Fig. 3, comprises a leading edge 18, a trailing edge 20, a pressure side 24, and a suction side 26, with a chord 38 extending between the leading edge 18 and the trailing edge 20. The chord 38 defines a chordwise direction Cd. A thickness direction Td is defined perpendicular to the chord 38. A chord length c is measured along the chordwise direction Cd between the leading edge 18 and the trailing edge 20. Positions of the airfoil are usually specified as positions (may be denoted chord positions) along the chord measured from the leading edge, usually relative to the chord, i.e. the chord length c, such as X% of the chord measured, e.g., from the leading edge 18. Thus, for example, the leading edge 18 will be at a chord position of 0% of the chord measured from the leading edge 18, and the trailing edge 20 will be at a chord position of 100% of the chord measured from the leading edge 18.

In the cross sectional plane, as illustrated, being perpendicular to the longitudinal direction of the wind turbine blade, the pressure side 24 and the suction side 26, meets at the trailing edge 20 forming a first trailing edge angle 102. The first trailing edge angle 102 being between the pressure side 24 and the suction side 26 at the trailing edge 20. The first trailing edge angle 102 may be at least 15 degrees, such as between 15-30 degrees. In some example, the first trailing edge angle 102 may be between 17-25 degrees. Such trailing edge angles are generally higher than conventional prior art airfoils of wind turbine blades having much lower trailing edge angles.

The pressure side of the presently disclosed airfoil may be substantially straight near the trailing edge, e.g. for all positions between 90% and 98% of the chord measured from the leading edge 18 and/or for all positions between 85% and 100% of the chord measured from the leading edge 18.

The pressure side 24, as illustrated in the cross sectional plane, is convex between the leading edge 18 and a first chord position 104. This part of the pressure side 24 may be denoted the convex pressure side part 106. The first chord position may be at a first chord distance, e.g. about 50% of the chord in the illustrated example, measured from the leading edge 18.

The pressure side, as illustrated in the cross sectional plane, is concave between the first chord position 104 and a second chord position 108. This part of the pressure side 24 may be denoted the concave pressure side part 110. The second chord position 108 may be at a second chord distance, e.g. about 85% or 90% of the chord, measured from the leading edge 18. As seen the second chord distance, i.e. the distance between the leading edge 18 and the second chord position 108, may be larger than the first chord distance, i.e. the distance between the leading edge 18 and the first chord position 104. Thus, the second chord position 108 is positioned more towards the trailing edge 20 than the first chord position 104.

In some examples, the concave pressure side part 110 may continue all the way or nearly all the way to the trailing edge 20, i.e. the second chord position 108 may be at the trailing edge 20 or near the trailing edge, i.e. at a distance of 100% or close to 100% of the chord measured from the leading edge 18. However, in other examples, the pressure side 24 near the trailing edge 20 is substantially straight. In other words, the pressure side 24 may be substantially linear between the second chord position 108 and the trailing edge 20. This part of the pressure side 24 may be denoted the straight pressure side part 112.

Maximum curvature of the pressure side 24 in the range between the first chord position 104 and the trailing edge 20 may be located between the first chord position 104 and 75% of the chord measured from the leading edge. In other words, the maximum concavity of the pressure side 24 may be found on the leading edge side of the 75% chord position. Consequently, the pressure side 24 may be more straight between the 75% chord position and the trailing edge 20.

As illustrated, the disclosed airfoil 100 may have the chord 38 located between the pressure side 24 and the suction side 26. This is opposed to known prior art airfoils where the chord extends outside the blade near the trailing edge because of increased curvature of the pressure side 24 near the trailing edge 20. In some examples, the disclosed airfoil may have the chord 38 located between the pressure side 24 and the suction side 26 for all positions of the chord, or at least for all positions between 70% and 100% or for all positions between 70% and 95% of the chord measured from the leading edge 18.

The pressure side 24 may, near the trailing edge, be substantially parallel to the chord 38, e.g. within one degree of the chord 38. This may, for example, be the case for all positions between 85% and 100% of the chord measured from the leading edge and/or for all positions between 90% and 98% of the chord measured from the leading edge.

The airfoil 100 has a pressure side to chord distance 114 between the pressure side 24 and the chord 38 measured perpendicular to the chord 38. As can be seen the pressure side to chord distance 114 has a maximum within the convex pressure side part 106, and is small near the trailing edge 20. In some examples, not specifically illustrated, the pressure side to chord distance 114 may be negative at positions where the chord 38 extends outside the blade, e.g. if the curvature of the concave pressure side part 110 is such that the pressure side 24 near the trailing edge 20 curves above the chord 38. As can be seen in the illustrated example, the pressure side to chord distance 114 may be quite small, e.g. less than 0.5% of the chord length c, for positions near the trailing edge 20, e.g. for all positions between 80% and 100% of the chord measured from the leading edge.

The airfoil 100 has a blade thickness 116, which is defined as the distance between the pressure side 24 and the suction side 26 measured perpendicular to the chord 38. The maximum blade thickness, i.e. where the blade thickness 116 is the largest, may be at a position between 20-30%, such as between 25-30%, such as between 25-29%, of the chord measured from the leading edge 18. Compared to prior art airfoils for wind turbine blades, the maximum blade thickness of the present airfoil 100 may be closer to the leading edge 18. In some examples, the maximum blade thickness may be between 19-23% of the chord length c.

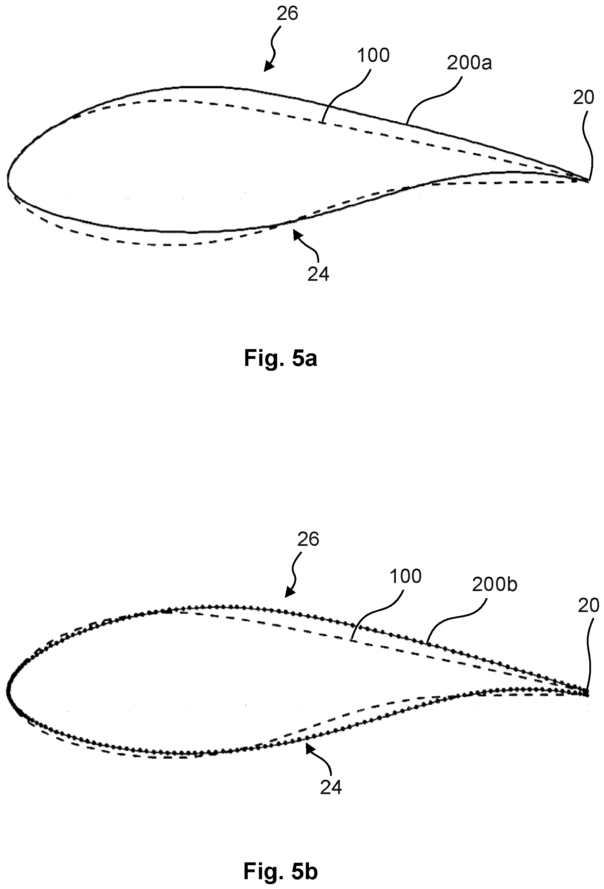

Figs. 5a and 5b schematically shows an exemplary airfoil 100 of the present disclosure shown in dashed lines as compared to two prior art wind turbine airfoils 200a, 200b, shown respectively with a solid line and a solid dotted line. As can be seen the airfoil 100 of the present disclosure has a substantially flat pressure side 24 near the trailing edge 20, and a more open, i.e. greater, trailing edge angle between the pressure side 24 and the suction side 26 at the trailing edge 20. The illustrated airfoils 100, 200a, 200b have the same maximum relative thickness, i.e. the maximum thickness relative to the chord length.

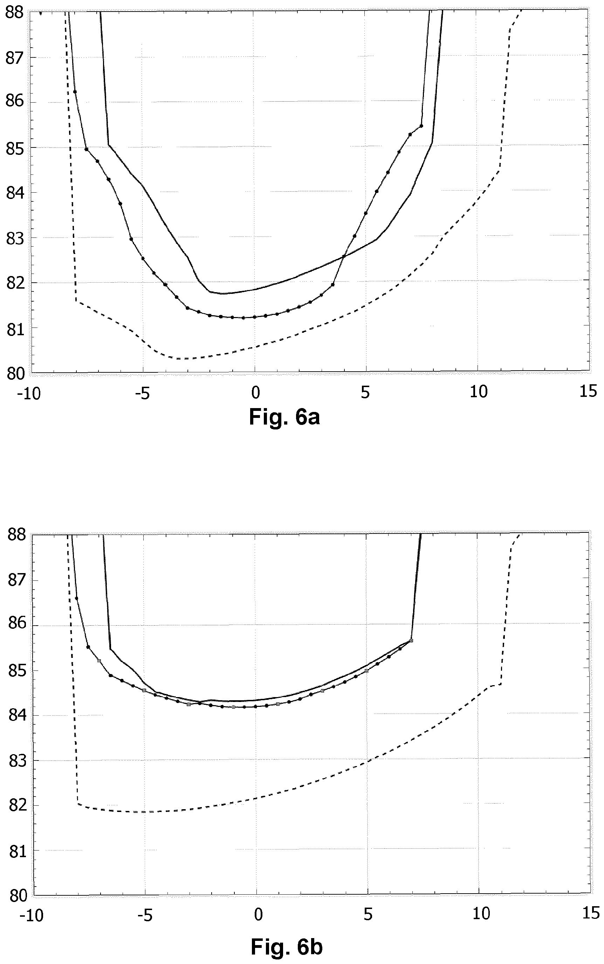

Simulation data for the airfoils 100, 200a, 200b illustrated in Figs. 5a and 5b are illustrated in Figs. 6a-7b. where data for the airfoil 100 of the present disclosure is represented by a dashed line, data for the airfoil 200a, as illustrated in Fig. 5a is represented by a solid line, and data for the airfoil 200b, as illustrated in Fig. 5b is represented by a solid dotted line.

Figs. 6a and 6b show noise levels for each of the airfoils at various angle of attack. Thus, the horizontal axis shows angle of attack (AoA), and the vertical axis shows noise in terms of A weighted sound pressure level (SPL). In Fig. 6a data is shown for clean conditions of the airfoils, while Fig. 6b shows the data for trip conditions, which is used to affect the boundary layer, such as to simulate a more real-world environment.

As can be seen by Figs. 6a and 6b, the presently disclosed airfoil 100 has lower noise on wide range of angle of attack compared to the prior art airfoils 200a, 200b. The lower noise emission is especially significant for the trip conditions shown in Fig. 6b. The suggested explanation of this surprising effect is that the limited concave curvature of the pressure side is the main reason for this noise reduction, because a concave curvature of the pressure side forces a strong pressure gradient which will impact the growth of the turbulent boundary layer and cause more noise when the air reaches the trailing edge. The presently disclosed airfoil at least reduces this effect by having a more flat pressure side near the trailing edge and a more open trailing edge angle.

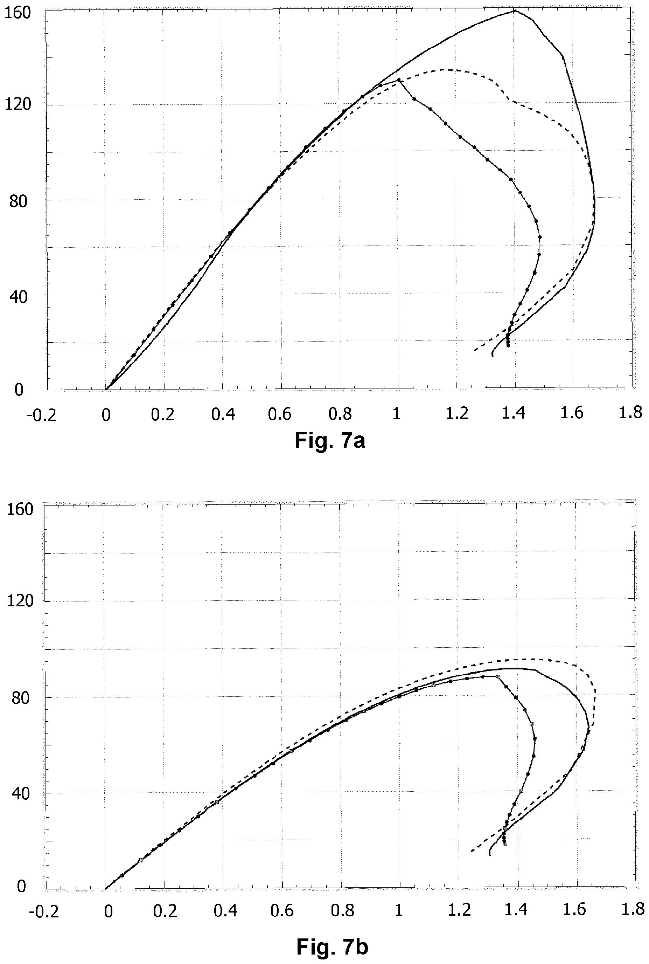

Figs. 7a and 7b show aerodynamic efficiency, more specifically in terms of the lift drag ratio, for each of the airfoils at various lift coefficients, which is impacted among other things by the angle of attack, Reynolds number and leading edge roughness. Thus, the horizontal axis shows the lift coefficient, and the vertical axis shows the lift/drag ratio. In Fig. 7a data is shown for clean conditions of the airfoils, while Fig. 7b shows the data for trip conditions.

As can be seen by Fig. 7a, the presently disclosed airfoil 100 has an aerodynamic performance between the two other tested prior art airfoils 200a, 200b for clean conditions, while for trip conditions, as seen in Fig. 7b, the presently disclosed airfoil 100 performs better than the two other tested prior art airfoils 200a, 200b. Thus, it is seen that the low noise emittance obtained by the presently disclosed airfoil 100, as evident from Figs. 6a and 6b, has been found to be obtained without negatively impacted aerodynamic performance.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance, but are included to identify individual elements. Furthermore, the labelling of a first element does not imply the presence of a second element and vice versa.

### LIST OF REFERENCES

- 2: wind turbine
- 4: tower
- 6: nacelle
- 8: hub
- 10: blade
- 14: blade tip
- 15: tip end
- 16: blade root
- 17: root end
- 18: leading edge
- 20: trailing edge
- 24: first blade shell part (pressure side)
- 26: second blade shell part (suction side)
- 28: bond lines/glue joints
- 30: root region
- 32: transition region
- 34: airfoil region
- 34a, 34b, 34c: airfoil blade section
- 38: chord line
- 39: blade median
- 40: shoulder
- 42: leading edge shear web
- 44: trailing edge shear web
- 46: spar cap
- 48: joint
- 100: airfoil
- 102: first trailing edge angle
- 104: first chord position
- 106: convex pressure side part
- 108: second chord position
- 110: concave pressure side part
- 112: straight pressure side part
- 114: pressure side to chord distance
- 116: blade thickness
- Ld: longitudinal direction
- La, Lb, Lc: blade section length
- Cd: chordwise direction
- c: chord length
- Td: Thickness direction

## Claims

1. A wind turbine blade having a profiled contour including a pressure side and a suction side, and a leading edge and a trailing edge with a chord extending therebetween defining a chordwise direction and a chord length between the leading edge and the trailing edge, the wind turbine blade extending in a longitudinal direction between a root end and a tip end, the wind turbine blade having a blade length along the longitudinal direction from the root end to the tip end,
wherein the wind turbine blade has a first airfoil blade section having a first blade section length along the longitudinal direction and being located between 40% and 100% of the blade length measured from the root end,
wherein, within the first airfoil blade section, the pressure side and the suction side, in a cross sectional plane perpendicular to the longitudinal direction, meets at the trailing edge forming a first trailing edge angle between the pressure side and the suction side at the trailing edge,
wherein the first trailing edge angle is at least 15 degrees, such as between 15-30 degrees, preferably between 17-25 degrees, and
wherein, within the first airfoil blade section, the pressure side is substantially straight near the trailing edge.

2. Wind turbine blade according to claim 1, wherein, within the first airfoil blade section:
- the pressure side in the cross sectional plane is convex between the leading edge and a first chord position, the first chord position being at a first chord distance measured from the leading edge, and
- the pressure side in the cross sectional plane is concave between the first chord position and a second chord position, the second chord position being at a second chord distance measured from the leading edge, wherein the second chord distance is larger than the first chord distance, and
wherein a maximum curvature of the pressure side in the range between the first chord position and the trailing edge is located between the first chord position and 75% of the chord measured from the leading edge.

3. Wind turbine blade according to claim 2, wherein, within the first airfoil blade section, the pressure side in the cross sectional plane is substantially linear between the second chord position and the trailing edge.

4. Wind turbine blade according to any of the preceding claims, wherein, within the first airfoil blade section, for all positions between 70% and 95% of the chord measured from the leading edge, the chord is located between the pressure side and the suction side.

5. Wind turbine blade according to any of the preceding claims, wherein, within the first airfoil blade section, a pressure side to chord distance between the pressure side and the chord measured perpendicular to the chord is less than 0.5% of the chord length for all positions between 80% and 100% of the chord measured from the leading edge.

6. Wind turbine blade according to any of the preceding claims, wherein, within the first airfoil blade section, the pressure side is substantially straight for all positions between 90% and 98% of the chord measured from the leading edge.

7. Wind turbine blade according to any of the preceding claims, wherein, within the first airfoil blade section, the pressure side is substantially parallel to the chord near the trailing edge and/or for all positions between 90% and 98% of the chord measured from the leading edge.

8. Wind turbine blade according to any of the preceding claims, wherein blade thickness is defined as the distance between the pressure side and the suction side measured perpendicular to the chord, and wherein, within the first airfoil blade section, the maximum blade thickness is at a position between 20-30% of the chord measured from the leading edge, such as between 25-30% of the chord measured from the leading edge, such as between 25-29% of the chord measured from the leading edge.

9. Wind turbine blade according to any of the preceding claims, wherein, within the first airfoil blade section, the maximum blade thickness is between 19-23% of the chord length.

10. Wind turbine blade according to any of the preceding claims, wherein the first blade section length is at least 10% of the blade length, such as at least 50% of the blade length.

11. Wind turbine blade according to any of the preceding claims, wherein the blade length is more than 60 metres, such as more than 70 metres.

12. Wind turbine comprising two or more wind turbine blades, wherein each of the two or more wind turbine blades are according to any of the preceding claims.
